# EUROPEAN PATENT SPECIFICATION

(11) **EP 3 652 113 B1**
(45) Date of publication and mention of the grant of the patent: **20.09.2023**
(21) Application number: 18752862.5
(22) Date of filing: 13.07.2018
(51) Int. Cl.: C01G 53/00

(54) **POSITIVE ELECTRODE ACTIVE SUBSTANCE PARTICLES COMPRISING LITHIUM NICKELATE COMPOSITE OXIDE, AND NON-AQUEOUS ELECTROLYTE SECONDARY BATTERY**
AUF LITHIUM-NICKELAT MISCHOXID BASIERENDE PARTIKEL EINES POSITIVELEKTRODENAKTIVMATERIALS UND SEKUNDÄRBATTERIE MIT WASSERFREIEM ELEKTROLYT
PARTICULES DE MATÉRIAU POUR ÉLECTRODE POSITIVE DE BATTERIE À BASE D'OXYDES COMPOSITE DE LITHIUM-NICKEL ET BATTERIES SECONDAIRES À ELECTROLYTE NON-AQUEUX

(30) Priority: 14.07.2017 US 201762532505 P
(43) Date of publication of application: 20.05.2020
(73) Proprietor: Toda Kogyo Corp., Hiroshima-shi, Hiroshima 732-0828 (JP)
(72) Inventor: WATANABE, Hiroyasu, Battle Creek, Michigan 49037 (US); SUN, Xiang, Battle Creek, Michigan 49037 (US)
(74) Representative: J A Kemp LLP
(86) International application number: PCT/IB2018/055199
(87) International publication number: WO 2019/012497

(56) References cited:
- WO-A1-2012/022618
- WO-A1-2012/022624
- WO-A1-2016/196445
- BETTGE MARTIN ET AL: "Improving high-capacity Li1.2Ni0.15Mn0.55Co0.1O2-based lithium-ion cells by modifiying the positive electrode with alumina", JOURNAL OF POWER SOURCES, ELSEVIER SA, CH, vol. 233, 29 January 2013 (2013-01-29), pages 346-357, XP028997673, ISSN: 0378-7753, DOI: 10.1016/J.JPOWSOUR.2013.01.082

## Description

### TECHNICAL FIELD

The present invention relates to positive electrode active substance particles having a high energy density and excellent repeated charge/discharge cycle characteristics, as well as a non-aqueous electrolyte secondary battery using the positive electrode active substance particles.

### BACKGROUND ART

With the recent rapid progress for reduction in size and weight of electronic equipments such as mobile phones and personal computers, there is an increasing demand for secondary batteries having a high energy density as a power source for driving these electronic equipments. Under these circumstances, the batteries having a large charge/discharge capacity per unit weight and unit volume and high repeated charge/discharge cycle characteristics have been recently noticed.

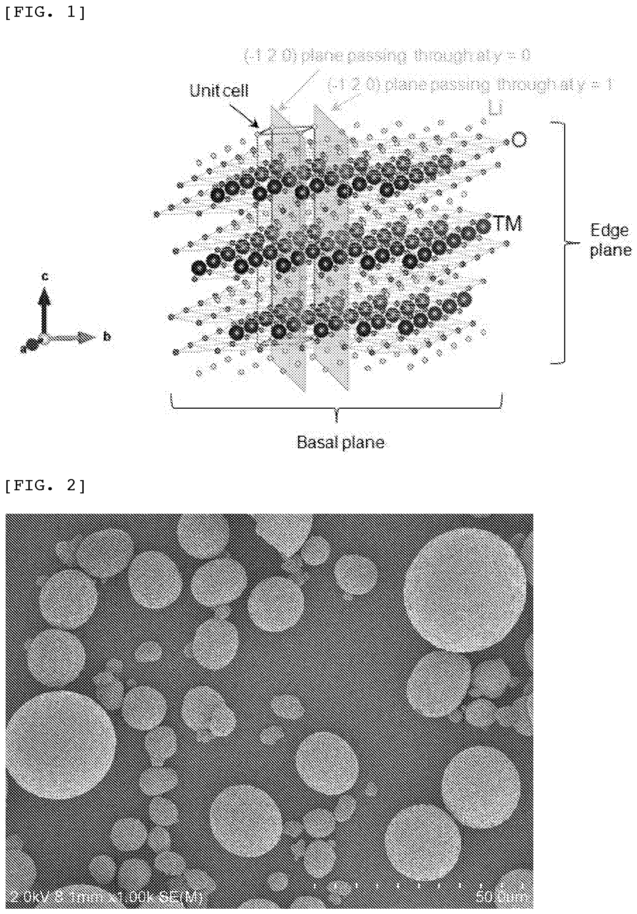

Hitherto, as one kind of positive electrode active substance particles which are useful for high energy-type lithium ion secondary batteries, there is known lithium nickelate LiNiO₂ as shown in FIG. 1 where the crystal model denotes a layer (rock salt type) structure having a 4 V-order voltage. FIG. 1 shows a layer structure represented by a hexagonal lattice formed by balls indicating Li and TM (transition metal) and binding balls indicating oxygen with each other, in which the same kinds of atoms forms the hexagonal lattice in the a-b plane. The aforementioned LiNiO₂ particles are inexpensive and have a high capacity and excellent output characteristics as compared to lithium cobaltate LiCoO₂ particles as a generally used positive electrode active substance, and therefore have been mainly applied to a power source for power tools. In recent years, the LiNiO₂ particles also tend to be now applied to a driving power source for electric vehicles in view of their characteristics. However, the lithium ion secondary batteries using the aforementioned LiNiO₂ particles as active substance particles therefor have problems such as deterioration in repeated charge/discharge cycle characteristics owing to elution of any ions other than Li⁺ ions from the active substance particles or incompleteness of the reaction between the raw material particles upon synthesis thereof. For these reasons, it has been demanded to further improve powder characteristics of the active substance particles.

As is well known in the art, in the NiO₆ octahedron constituting lithium nickelate crystals in the positive electrode active substance particles, the Ni³⁺ ion is kept in a low spin state at room temperature. Since the electronic configuration of the d-orbital of the Ni³⁺ ion is represented by t_{2g}⁶e_{g}¹, the bonding distance between Ni-O is elongated by the one e_{g}-based electron so that the bonding force between these elements tends to be deteriorated. As a result, the conventional positive electrode active substance particles have failed to exhibit good stability of the lithium nickelate crystals. In addition, the Ni²⁺ ion has an ionic radius close to that of Li⁺ ion, and therefore tends to suffer from structural defects such as cation mixing upon synthesis of the positive electrode active substance particles. Furthermore, the Ni⁴⁺ ion in a charged state of the battery is in a metastable condition, so that oxygen is emitted therefrom at an elevated temperature. For this reason, it has been contemplated that the Ni³⁺ ion in the conventional positive electrode active substance particles is substituted with ions of the other different kinds of elements such as Co³⁺ ion or Al³⁺ ion to improve characteristic thereof (Non-Patent Literature 1).

On the other hand, even the positive electrode active substance particles comprising the lithium nickelate composite oxide whose Ni³⁺ ion is substituted with ions of the other different kinds of elements still comprise an excess amount of lithium carbonate or lithium hydroxide as an impurity phase. These unreacted lithium compounds are main factors causing increase in a powder pH value of the positive electrode active substance particles, and tend to induce not only gelation of an electrode slurry upon production thereof, but also generation of gases owing to side reactions caused upon storage of the resulting secondary battery under high-temperature conditions in association with charging and discharging cycles of the battery. In particular, in order to avoid remarkable adverse influence of the lithium hydroxide, the unreacted substances being present on a surface of the respective particles are carbonated (Patent Literatures 1 and 2), or removed by washing with water and drying (Non-Patent Literature 2). Meanwhile, the side reactions as used herein mean electrochemical reactions or chemical reactions other than those in association with change in valence of the transition metal owing to insertion and desertion of the Li⁺ ion relative to the electrode active substance upon charging and discharging of the secondary battery. As the side reactions, there may be mentioned, for example, formation of hydrofluoric acid in an electrolyte solution by the reaction between water included or produced and the electrolyte LiPF₆ whereby the electrode active substance is broken by the hydrofluoric acid.

As the method of further improving the positive electrode active substance particles comprising the lithium nickelate composite oxide, there has been proposed the method of subjecting the particles as core particles to surface treatment in which the unreacted lithium carbonate or lithium hydroxide is converted into the other kind of lithium compound. The coating film obtained by the surface treatment acts as a protective film against the hydrofluoric acid produced as a by-product upon charging and discharging of the secondary battery to prolong a service life of the battery (Non-Patent Literature 3).

As the other method of further improving the positive electrode active substance particles comprising the lithium nickelate composite oxide, there has been proposed the method of subjecting the particles as core particles to vapor phase epitaxial growth in which study has been made to coat the particles with a very thin film formed of an inorganic compound. The very thin coating film acts for suppressing destruction of a crystal structure of the positive electrode active substance particles in the vicinity of the surface of the respective particles owing to charging and discharging of the secondary battery without inhibiting insertion and desertion of the Li⁺ ion in the particles, whereby a service life of the secondary battery is prolonged (Non-Patent Literatures 4 and 5). WO 2016/196445 A1 discloses positive electrode material particles having a core consisting of LiNi0.8Co0.1Mn0.1O2, with a shell of coating containing Al, made by Atomic Layer Deposition, having a thickness of 10 nm.

### CITATION LIST;

### NON-PATENT LITERATURES

Non-Patent Literature 1: C. Delmas, et al., "Electrochimica Acta", Vol. 45, 1999, pp. 243-253
Non-Patent Literature 2: J. Kim, et al., "Electrochem. and Solid-State Lett.", Vol. 9, 2006, pp. A19-A23
Non-Patent Literature 3: M. -J. Lee, et al., "J. Mater. Chem. A", Vol. 3, 2015, pp. 13453-13460
Non-Patent Literature 4: J. -S. Park, et al., "Chem. Mater.", Vol. 26, 2014, pp. 3128-3134
Non-Patent Literature 5: D. Mohanty, et al., "Scientific Reports", Vol. 6, 2016, pp. 26532-1-16

### PATENT LITERATURES

Patent Literature 1: Japanese Patent Application Laid-open (KOKAI) No. 10-302779(1998)
Patent Literature 2: Japanese Patent Application Laid-open (KOKAI) No. 2004-335345

### SUMMARY OF INVENTION

### TECHNICAL PROBLEM

At present, it has been strongly required to provide positive electrode active substance particles comprising a lithium nickelate composite oxide for a non-aqueous electrolyte secondary battery that is excellent in repeated charge/discharge cycle characteristics while maintaining a high capacity upon charging at a high voltage. However, the positive electrode active substance particles capable of satisfying these requirements to a sufficient extent have not been obtained yet.

That is, in the technologies described in the Non-Patent Literatures 1 and 2 as well as the Patent Literatures 1 and 2, although the contents of lithium hydroxide and/or lithium carbonate in the positive electrode active substance particles can be reduced, the particles are brought into direct contact with an electrolyte solution. For this reason, these technologies have failed to suppress occurrence of the side reactions at an boundary surface between the positive electrode active substance and the electrolyte solution, and therefore have also failed to exhibit excellent repeated charge/discharge cycle characteristics of the resulting secondary battery. In addition, the cost required for water-washing and drying the lithium nickelate composite oxide particles is comparatively large, and the technologies described in these conventional arts have failed to provide a method that can be suitably used for mass-production thereof.

In the technology described in the Non-Patent Literature 3, there has been proposed the method of subjecting the lithium nickelate composite oxide particles to surface treatment with vanadium by sol-gel method. However, owing to poor safety of vanadium and an expensive sol-gel method for production of the particles, the surface treatment method has failed to provide a method that is suitable for mass-production of the positive electrode active substance particles. In addition, the surface coating film obtained by the method has a thickness of 17 nm which is too large to merely suppress occurrence of the side reactions at a boundary surface between the positive electrode active substance and the electrolyte solution.

In the technologies described in the Non-Patent Literatures 4 and 5, there has been proposed the method of forming a very thin inorganic compound film on the surface of respective lithium nickelate composite oxide particles by an atomic layer deposition method. However, the obtained film is not sufficiently crystallized, and these technologies therefore fail to suppress occurrence of the side reactions at a boundary surface between the positive electrode active substance and the electrolyte solution to a sufficient extent.

In consequence, an object or technical task of the present invention is to provide positive electrode active substance particles comprising a lithium nickelate composite oxide which are excellent in charge/discharge cycle characteristics when used in a secondary battery while maintaining a high capacity thereof at a high voltage, as well as a secondary battery using the positive electrode active substance particles.

### SOLUTION TO PROBLEM

The above object or technical task of the present invention can be achieved by the following aspects of the present invention.

That is, according to the present invention, there are provided positive electrode active substance particles each comprising:
a core particle X comprising a lithium nickelate composite oxide having a layer structure which is represented by the formula:

   Li₁₊ₐNi_{1-b-c}Co_{b}M_{c}O₂

   wherein M is at least one element selected from the group consisting of Mn, Al, B, Mg, Ti, Sn, Zn and Zr; a is a number of -0.1 to 0.2 (-0.1 ≤ a ≤ 0.2); b is a number of 0.05 to 0.5 (0.05 ≤ b ≤ 0.5); and c is a number of 0.01 to 0.4 (0.01 ≤ c ≤ 0.4); and
a coating compound Y comprising at least one element selected from the group consisting of Al, Mg, Zr, Ti and Si,
in which the coating compound Y has an average film thickness of 0.2 to 5 nm, a degree of crystallinity of 50 to 95%, a degree of epitaxy of 50 to 95% and a coating ratio (coverage) of 50 to 95% (Invention 1).

Also, according to the present invention, there are provided the positive electrode active substance materials as defined in the above Invention 1, wherein a, b and c are such that -0.08 ≤ a ≤ 0.18, 0.10 ≤ b ≤ 0.4 and 0.02 ≤ c ≤ 0.35 (Invention 2).

Also, according to the present invention, there are provided the positive electrode active substance particles as defined in either of the above Invention 1 or Invention 2, wherein the coating compound Y has an average film thickness of 0.22 to 1.0 nm, a degree of crystallinity of 70 to 93%, a degree of epitaxy of 70 to 93% and a coating ratio (coverage) of 70 to 93% (Invention 3).

Also, according to the present invention, there are provided the positive electrode active substance particles as defined in any one of the above Inventions 1 to 3, wherein an average value of a ratio of a total number of atoms of elements Al, Mg, Zr, Ti and Si in the coating compound Y to a number of atoms of an element Ni in the coating compound Y is not less than 0.5 (Invention 4).

In addition, according to the present invention, there are provided the positive electrode active substance particles as defined in any of the above Inventions 1 to 4, which are in the form of positive electrode active substance particles that are further coated with lithium carbonate (Invention 5).

Also provided are the positive electrode active substance particles as defined in any of the above Inventions 1 to 5, wherein a content of lithium hydroxide LiOH in the positive electrode active substance particles is not more than 0.50% by weight; a content of lithium carbonate Li₂CO₃ in the positive electrode active substance particles is not more than 0.65% by weight; and a weight ratio of the content of lithium carbonate to the content of lithium hydroxide is not less than 0.9 (Invention 6).

Further provided are the positive electrode active substance particles as defined in any of the above Inventions 1 to 6, wherein the positive electrode active substance particles have a BET specific surface area of 0.05 to 0.70 m²/g (Invention 7) .

Additionally provided are the positive electrode active substance particles as defined in any of the above Inventions 1 to 7, wherein a median diameter D₅₀ of aggregated particles of 1 to 30 µm (Invention 8).

Also provided are the positive electrode active substance particles as defined in any of the above Inventions 1 to 8, which have a 2% powder pH value of not more than 11.6 (Invention 9).

The invention further provides a positive electrode sheet comprising the positive electrode active substance particles as defined in any of the above Inventions 1 to 9, a conducting agent and a binder (Invention 10).

The invention also provides a non-aqueous electrolyte secondary battery comprising a positive electrode active substance comprising at least partially the positive electrode active substance particles as defined in any of the above Inventions 1 to 9 (Invention 11).

Additionally provided is the use of the positive electrode active substance particles as defined in any one of Inventions 1 to 9 in a non-aqueous electrolyte secondary battery (Invention 12).

### ADVANTAGEOUS EFFECTS OF INVENTION

The positive electrode active substance particles comprising the lithium nickelate composite oxide according to the present invention respectively comprise the coating compound on the lithium nickelate composite oxide core particle. The coating compound is capable of forming a protective layer in the form of a nano-size thin film having a high degree of epitaxy, so that direct contact between a electrolyte solution and the lithium nickelate composite oxide particles inside of the resulting secondary battery can be prevented to thereby suppress occurrence of the side reactions in the secondary battery, but insertion and desertion of Li⁺ ions in the secondary battery are not inhibited. As a result, the positive electrode active substance particles of the present invention can be suitably used as positive electrode active substance particles for a non-aqueous electrolyte secondary battery which is excellent in charge/discharge cycle characteristics while maintaining a high capacity.

### BRIEF DESCRIPTION OF THE DRAWINGS

FIG. 1 is a schematic view showing a crystal structure of positive electrode active substance particles comprising a lithium nickelate composite oxide obtained according to the present invention, and an explanatory view of a crystal plane thereof.
FIG. 2 is a secondary electron image with a low magnification (x 1 k) by a scanning electron microscope (SEM) showing the positive electrode active substance particles obtained in Example 1 of the present invention.
FIG. 3 is a secondary electron image with a high magnification (x 25 k) by SEM showing the positive electrode active substance particles obtained in Example 1 of the present invention.
FIG. 4 is a bright field image with a low magnification (x 50 k) by a scanning transmission electron microscope (STEM) showing the positive electrode active substance particles obtained in Example 1 of the present invention.
FIG. 5 is a bright field image with a high magnification (x 1.2 m) by STEM showing the positive electrode active substance particles obtained in Example 1 of the present invention, as well as an Al element map by an energy dispersive X-ray spectroscopy (EDS).
FIG. 6 is an image with a ultrahigh magnification (x 10 m) by STEM showing the positive electrode active substance particles obtained in Example 1 of the present invention, as well as the results of EDS line analysis.
FIG. 7 is an enlarged analysis view of the bright field image with a ultrahigh magnification (x 10 m) by STEM showing the positive electrode active substance particles obtained in Example 1 of the present invention.
FIG. 8 is a view showing the results of a line analysis by electron energy loss spectroscopy (EELS) of the positive electrode active substance particles obtained in Example 1 of the present invention.
FIG. 9 is a secondary electron image with an ultrahigh magnification (x 100 k) by SEM showing the positive electrode active substance particles obtained in Example 1 of the present invention.
FIG. 10 is a secondary electron image with an ultrahigh magnification (x 100 k) by SEM showing the positive electrode active substance particles obtained after being washed with water in Example 1 of the present invention.
FIG. 11 is a secondary electron image with an ultrahigh magnification (x 100 k) by SEM showing the positive electrode active substance particles obtained in Comparative Example 1 of the present invention.
FIG. 12 is a spectra diagram by Auger electron spectroscopy (AES) of the positive electrode active substance particles obtained in Example 1 of the present invention, in which the peaks are due to the KLL Auger electron of the element Li.

### DESCRIPTION OF EMBODIMENTS

The construction of the present invention is described in more detail below.

First, the lithium nickelate-based positive electrode active substance particles according to the present invention are described.

The lithium nickelate LiNiO₂ according to the present invention has a layer (rock salt) structure formed of a trigonal system having a space group of R3-m wherein the line "-" in the symbol of the space group means such a mark as generally expressed by a macron which should be laid on "3", but conveniently positioned after "3" herein. In addition, the lithium nickelate composite oxide having the same crystal structure as that of the lithium nickelate according to the present invention comprises a host material constituted of the lithium nickelate, and is represented by the chemical formula:

Li₁₊ₐNi_{1-b-c}Co_{b}M_{c}O₂

wherein M is at least one element selected from the group consisting of Mn, Al, B, Mg, Ti, Sn, Zn and Zr; a is a number of -0.1 to 0.2 (-0.1 ≤ a ≤ 0.2); b is a number of 0.05 to 0.5 (0.05 ≤ b ≤ 0.5); and c is a number of 0.01 to 0.4 (0.01 ≤ c ≤ 0.4).

The aforementioned element M is desirably an element capable of forming a solid solution in lithium nickelate LiNiO₂, and an average valence of M is preferably closer to 3 since M is substituted for Ni³⁺ ion. The numbers a, b and c are preferably in the range of -0.1 ≤ a ≤ 0.2, 0.05 ≤ b ≤ 0.5 and 0.01 ≤ c ≤ 0.4, respectively, and more preferably in the range of -0.08 ≤ a ≤ 0.18, 0.10 ≤ b ≤ 0.4 and 0.02 ≤ c ≤ 0.35, respectively.

The positive electrode active substance particles comprising the lithium nickelate composite oxide according to the present invention each comprise the particle represented by the above chemical formula as the core particle X, and the epitaxially grown coating compound Y that comprises at least one element selected from the group consisting of Al, Mg, Zr, Ti and Si. The epitaxial growth as used herein means that crystals of the coating compound Y are grown along a crystal plane of the core particle X. The crystal structure of the coating compound Y is preferably the same as or similar to that of the lithium nickelate composite oxide as a host crystal so as to allow epitaxial growth of the coating compound Y. For example, the crystal structure of the coating compound Y is preferably in the form of an oxide having a layer structure, a rock salt structure, a spinel structure or the like, i.e., is preferably in the form of a compound whose oxygen forms a face centered cubic lattice or a distorted face centered cubic lattice and which contains at least one cation selected from the group consisting of elements Al, Mg, Zr, Ti and Si in an anion layer formed by an oxygen hexagonal lattice. More specifically, as the coating compound Y, there may be mentioned γ-Al₂O₃, α-LiAlO₂, MgO, Li₂ZrO₃, Li₂TiO₃, etc.

The average film thickness of the coating compound Y in the positive electrode active substance particles comprising the lithium nickelate composite oxide according to the present invention is 0.2 to 5 nm. When the average film thickness of the coating compound Y is less than 0.2 nm, the coating ratio (coverage) of the coating compound Y over the respective core particles tends to be low. On the other hand, when the average film thickness of the coating compound Y is more than 5 nm, the coating compound Y tends to act as a barrier against the conduction of ions or electrons so that the characteristics of the resulting battery tend to be adversely affected owing to a high electric resistance thereof. The average film thickness of the coating compound Y is preferably 0.21 to 2.0 nm, and more preferably 0.22 to 1.0 nm.

The degree of crystallinity of the coating compound Y in the positive electrode active substance particles comprising the lithium nickelate composite oxide according to the present invention is 50 to 95%. When the degree of crystallinity of the coating compound Y is less than 50%, it is not possible to suppress decomposition of the coating compound Y upon charge/discharge cycles of the resulting battery, and as a result, it is not possible to sufficiently reduce occurrence of the side reactions upon charge/discharge cycles of the resulting battery. On the other hand, when the degree of crystallinity of the coating compound Y is more than 95%, the other powder characteristics tend to be deteriorated. The degree of crystallinity of the coating compound Y is preferably 60 to 94%, and more preferably 70 to 93%.

The degree of epitaxy of the coating compound Y in the positive electrode active substance particles comprising the lithium nickelate composite oxide according to the present invention is 50 to 95%. When the degree of epitaxy of the coating compound Y is less than 50%, it is not possible to suppress decomposition of the coating compound Y upon charge/discharge cycles of the resulting battery, and as a result, it is not possible to sufficiently reduce occurrence of the side reactions upon charge/discharge cycles of the resulting battery. On the other hand, when the degree of epitaxy of the coating compound Y is more than 95%, the other powder characteristics tend to be deteriorated. The degree of epitaxy of the coating compound Y is preferably 60 to 94%, and more preferably 70 to 93%.

The coating ratio (coverage) of the coating compound Y in the positive electrode active substance particles comprising the lithium nickelate composite oxide according to the present invention is 50 to 95%. The coating ratio (coverage) of the coating compound Y is represented by a ratio of a covering area of the coating compound Y to a surface area of the core particle X. When the coating ratio (coverage) of the coating compound Y is less than 50%, it is not possible to sufficiently reduce occurrence of the side reactions upon charge/discharge cycles of the resulting battery. On the other hand, when the coating ratio (coverage) of the coating compound Y is more than 95%, the obtained coating layer of the coating compound Y tends to have a vary large thickness. The coating ratio (coverage) of the coating compound Y is preferably 60 to 94%, and more preferably 70 to 93%.

In the coating compound Y in the positive electrode active substance particles comprising the lithium nickelate composite oxide according to the present invention, the average value of a ratio of the total number of atoms of elements Al, Mg, Zr, Ti and Si to the number of atoms of an element Ni which are present in the coating compound Y is preferably not less than 0.5. When the average value is less than 0.5, it tends to be difficult to distinguish the core particle X from the coating compound Y, and it also tends to be difficult to allow the coating compound Y to suitably exist over the core particle. The average value of the ratio of the total number of atoms of elements Al, Mg, Zr, Ti and Si to the number of atoms of an element Ni which are present in the coating compound Y is more preferably not less than 1.0, and even more preferably not less than 1.2.

The coating compound Y in the positive electrode active substance particles comprising the lithium nickelate composite oxide according to the present invention preferably comprises an element Li. When Li is contained in the coating compound Y, Li can be easily moved in the coating compound Y so that the electric resistance of the resulting battery can be reduced.

The positive electrode active substance particles comprising the lithium nickelate composite oxide according to the present invention are preferably in the form of positive electrode active substance particles that are further coated with lithium carbonate. The lithium carbonate is one of by-products produced by the side reactions upon charge/discharge cycles of the resulting battery, and is also one of the factors causing deterioration in charge/discharge cycle characteristics of the resulting battery. By previously incorporating lithium carbonate in the positive electrode active substance prior to construction of the battery, it is possible to suppress formation of lithium carbonate as a by-product produced by the side reactions upon charge/discharge cycles of the battery, and to attain good charge/discharge cycle characteristics of the resulting battery.

In the positive electrode active substance particles comprising the lithium nickelate composite oxide according to the present invention, it is preferred that the content of lithium hydroxide LiOH therein is not more than 0.50% by weight, and the content of lithium carbonate Li₂CO₃ therein is not more than 0.65% by weight. In particular, it is preferred that the content of lithium hydroxide in the positive electrode active substance particles is low. Also, it is preferred that the ratio of the content of lithium carbonate to the content of lithium hydroxide is not less than 0.9. In addition, it is more preferred that the contents of the impurity compounds that tend to create the aforementioned alkali source are reduced as low as possible, and it is therefore more preferred that the content of lithium hydroxide LiOH in the positive electrode active substance particles is not more than 0.47% by weight, the content of lithium carbonate Li₂CO₃ therein is not more than 0.55% by weight, and the ratio of the content of lithium carbonate to the content of lithium hydroxide is not less than 1.2. Furthermore, it is even more preferred that the ratio of the content of lithium carbonate to the content of lithium hydroxide is not less than 1.4.

The BET specific surface area of the lithium nickelate-based positive electrode active substance particles according to the present invention is preferably 0.05 to 0.7 m²/g. When the BET specific surface area of the lithium nickelate-based positive electrode active substance particles is less than 0.05 m²/g, the amount of coarse particles in the resulting positive electrode active substance particles tends to be increased. On the other hand, when the BET specific surface area of the lithium nickelate-based positive electrode active substance particles is more than 0.7 m²/g, the resulting positive electrode active substance particles tend to be bulky particles. In the case where the BET specific surface area of the lithium nickelate-based positive electrode active substance particles is either less than 0.05 m²/g or more than 0.7 m²/g, the resulting particles tend to become unsuitable as positive electrode active substance particles. The BET specific surface area of the lithium nickelate-based positive electrode active substance particles according to the present invention is more preferably 0.1 to 0.5 m²/g.

The median diameter D₅₀ of aggregated particles of the lithium nickelate-based positive electrode active substance particles according to the present invention is preferably 1 to 30 µm. When the median diameter D₅₀ of aggregated particles of the lithium nickelate-based positive electrode active substance particles is less than 1 µm, the resulting particles tend to be bulky particles. On the other hand, when the median diameter D₅₀ of aggregated particles of the lithium nickelate-based positive electrode active substance particles is more than 30 µm, the amount of coarse particles in the resulting particles tends to be increased. In the case where the median diameter D₅₀ of aggregated particles of the lithium nickelate-based positive electrode active substance particles is either less than 1 µm or more than 30 µm, the resulting particles tend to become unsuitable as positive electrode active substance particles. The median diameter D₅₀ of aggregated particles of the lithium nickelate-based positive electrode active substance particles according to the present invention is more preferably 2 to 25 µm and even more preferably 3 to 22 µm.

The 2% pH value of the lithium nickelate-based positive electrode active substance particles according to the present invention is preferably not more than 11.6 from the standpoint of avoiding gelation of an electrode slurry. The 2% pH value of the lithium nickelate-based positive electrode active substance particles according to the present invention is more preferably not more than 11.5.

Next, the method for producing the core particle X comprising the lithium nickelate composite oxide which is used in the lithium nickelate-based positive electrode active substance particles according to the present invention is described.

Upon production of the core particle X comprising the lithium nickelate composite oxide which can be used in the present invention, nickel hydroxide particles are used as a precursor of the core particle X. A nickel element in the nickel hydroxide particles may be substituted with a cobalt element or the other element M (such as Mn, Al, B, Mg, Ti, Sn, Zn and Zr). The method for producing the aforementioned precursor is not particularly limited. However, the precursor is preferably produced by a crystallization method using an ammonia complex in a wet reaction. The precursor is mixed with a lithium raw material and additives as desired, and the resulting mixture is calcined. The lithium raw material used above is not particularly limited, and lithium carbonate, lithium hydroxide and lithium hydroxide monohydrate may be used as a lithium raw material.

The core particle X comprising the lithium nickelate composite oxide according to the present invention may be basically produced by a solid state reaction method as the aforementioned procedure in which the mixture of the precursor and the respective raw materials is calcined. The solid state reaction is such a method in which the raw materials comprising respective elements constituting the target particles as aimed are mixed with each other, and the resulting mixture is subjected to high-temperature heat treatment to promote a chemical reaction between the respective solid raw materials. In order to facilitate diffusion of lithium in the precursor during the solid state reaction, it is desired that the particle diameter of the lithium raw material is very small and fine. It is also desired that the precursor and the raw materials are mixed by a drying method using no solvent. As the apparatus used for mixing the raw material particles, there may be used an attritor, a ball mill, a Henschel mixer, a high-speed mixer, etc.

As is well known in the art, upon synthesis of lithium nickelate by a solid state reaction, a part of nickel is converted into Ni²⁺ ion when calcined at an elevated temperature and substituted for Li⁺ ion in the crystal thereof, so that structural defects of the crystal are caused, which results in deterioration in battery characteristics. In addition, it is also known that NiO is produced when calcined at a still higher temperature (refer to H. Arai, et al., "Solid State Ionics", Vol. 80, 1995, pp. 261-269).

The method for producing the core particle X comprising the lithium nickelate composite oxide according to the present invention is characterized in that the aforementioned mixture is calcined in the temperature range of 600 to 930°C. When the calcination temperature is lower than 600°C, the solid state reaction tends to hardly proceed sufficiently, so that it may be impossible to obtain desired lithium nickelate composite oxide particles. When the calcination temperature is higher than 930°C, the amount of the Ni²⁺ ion intruded into lithium sites as structural defects tends to be increased, so that NiO having a rock salt structure as an impurity phase tends to be grown. The calcination temperature is preferably 700 to 900°C.

The core particle X comprising the lithium nickelate composite oxide according to the present invention is preferably produced by calcination conducted in a high-oxygen concentration atmosphere in order to reduce the content of the Ni²⁺ ion therein. The retention time of the aforementioned calcination temperature is about 5 to about 15 hr, and the temperature rise rate or temperature drop rate in the calcination is about 50 to about 200°C/hr. As the calcination furnace, there may be used a gas-flow box-type muffle furnace, a gas-flow rotary furnace, a roller hearth kiln, etc.

The core particle X comprising the lithium nickelate composite oxide according to the present invention is almost free of change in the crystal information by X-ray diffraction such as lattice constant or crystallite size in any of the case where the lithium nickelate composite oxide is ready for forming the core particle formed of the lithium nickelate composite oxide prior to being covered with the coating compound Y and the case where the lithium nickelate composite oxide is already covered with the coating compound Y and therefore forms the core particle, and still maintains the layer structure as shown in FIG. 1. The reason why these results are attained is considered to be that the coating compound Y has a very thin thickness.

Next, the method for producing the epitaxially grown coating compound Y comprising at least one element selected from the group consisting of Al, Mg, Zr, Ti and Si which is to be formed on the core particle X comprising the lithium nickelate composite oxide according to the present invention is described.

The coating compound Y according to the present invention is preferably produced by a vapor phase epitaxial growth method. Examples of the vapor phase epitaxial method method include a chemical vapor deposition (CVD) method, a physical vapor deposition (PVD) method and an atomic layer deposition (ALD) method. The atomic layer deposition method is one of the more preferred vapor phase epitaxial methods used in the present invention in which atomic layers are formed one by one (with a thickness of about 1 Å for each), i.e., the method in which atoms are deposited in the form of a layer or a granule by repeating the following four steps: 1) supplying a raw material gas A to a material to be treated, i.e., allowing the raw material gas A to react on a surface of the material to be treated; 2) evacuating the raw material gas A; 3) supplying a raw material gas B that is allowed to further react on the surface of the material to be treated; and 4) evacuating the raw material gas B, wherein the raw material gas A and the raw material gas B are necessarily different in composition from each other (refer to X. Meng, et al., "Adv. Mater.", Vol. 24, 2012, pp. 3589-3615, and A. W. Weimer, PARTEC 2004, "Particle Coating by Atomic Layer Deposition (ALD)").

Examples of the preferred combination of the raw material gas A and the raw material gas B used in the atomic layer deposition method as the method for producing the coating compound Y according to the present invention are as follows:
Raw Material Gas A/Raw Material Gas B:
Al₂(CH₃)₆/H₂O; Mg(C₂H₅)₂/H₂O; ZrCl₄/H₂O; TiCl₄/H₂O; SiCl₄/H₂O; etc.

It is estimated that the atomic layer deposition method is capable of producing an oxide, a carbonate or a hydroxide from these raw materials.

In the atomic layer deposition method as the method for producing the aforementioned coating compound Y according to the present invention, the number of repeated operations of the method including the steps 1) to 4) is 1 to 100 (times), preferably 2 to 50 and more preferably 2 to 10.

In the atomic layer deposition method as the method for producing the aforementioned coating compound Y according to the present invention, the temperature used for conducting the steps 1) to 4) may be an optional temperature within the range of 10 to 250°C.

In the method for producing the aforementioned coating compound Y according to the present invention, when the vapor phase epitaxially grown film is subjected to heat treatment at an optional temperature falling within the range of 150 to 500°C, it is possible to increase a degree of epitaxy and a degree of crystallinity of the coating compound Y. The temperature range of the heat treatment is preferably 200 to 450°C.

The aforementioned coating compound Y according to the present invention is formed into a film on the core particle X by the vapor phase epitaxial growth method, and then subjected to heat treatment. For this reason, the coating compound Y has a very small thickness as thin as several nm and is in the form of a thin film having a high epitaxy. As the method of analyzing the surface of the particle for identifying a crystal structure of the coating compound Y, there may be mentioned observation using a scanning transmission electron microscope (STEM), elemental analysis in depth direction by time-of-flight type secondary ion mass spectrometry, elemental analysis in depth direction by X-ray photoelectron spectroscopy, etc. In addition, there may also be used the method of estimating the crystal structure of the coating compound Y from a concentration of the element eluted from the coating compound only by chemical etching in a solvent.

The observation of the coating compound Y according to the present invention by STEM may be conducted as follows. As the pretreatment of the sample to be observed, the sample particles according to the present invention are embedded in a resin, and sliced into a thin piece having a thickness of about 100 nm by an ion slicer to observe about 10 points corresponding to positions on an outermost surface of respective aggregated particles that are different in size from each other using STEM. In this case, crystal particles are selected randomly at about 10 positions on the outermost surface of the aggregated particles, and observed with a crystal zone axis of the crystal of the lithium nickelate composite oxide having a layer structure. In the bright field (BF) image, the atom column reflecting an electrostatic potential of the crystal or the atomic layer is observed to determine the crystal zone axis. The positional information of a heavy atom in the crystal is retrieved from the high-angle annular dark field (HAADF) image, and adverse influence of interference fringes that might be observed in the BF image is removed to obtain the information concerning a boundary surface between the core particle X and the coating compound Y. The coating compound Y is present outside of the core particle X on the boundary surface, and therefore the crystal information of the coating compound Y is attained from the BF image corresponding to this position. Also, from the low-angle annular dark field (LAADF) image, a distorted layer that is present in the crystal of the lithium nickelate composite oxide in association with the coating compound Y is determined. Using an energy dispersive X-ray spectroscopy (EDS) apparatus equipped, heavy elements heavier than boron B are identified to obtain the positional information concerning these elements. In addition, using an electron energy loss spectroscopy (EELS) apparatus, light elements such as lithium Li, etc., are identified to obtain the positional information concerning these light elements.

The method for forming a further coating constituted of lithium carbonate in the positive electrode active substance particles comprising the lithium nickelate composite oxide according to the present invention is described.

The formation of the coating constituted of lithium carbonate according to the present invention is such a technology in which residual lithium hydroxide LiOH that is present in the aforementioned positive electrode active substance particles is efficiently converted into lithium carbonate Li₂CO₃, and is therefore different from the conventional technologies. More specifically, the method of forming the coating constituted of lithium carbonate according to the present invention is technically characterized in that by subjecting the positive electrode active substance particles to excessive humidification treatment, the residual lithium hydroxide LiOH in the particles is chemically transformed into LiOH·H₂O that tends to be easily carbonated at a low temperature. In this case, a slight amount of Li may be eluted from the lithium nickelate composite oxide and may be allowed to undergo chemical transformation into LiOH·H₂O.

The aforementioned coating constituted of lithium carbonate according to the present invention is preferably produced by subjecting the positive electrode active substance particles to excessive humidification treatment and then to heat treatment in atmospheric air at a temperature of 150 to 500°C. The excessive humidification treatment is preferably conducted under the conditions including a temperature of 10 to 50°C, a relative humidity of an ambient gas of 10 to 90%, and a treating time of 0.5 to 15 hr. In the case where the humidification treatment is conducted under severe conditions, i.e., when the temperature is higher than 50°C, the relative humidity of an ambient gas is more than 90% or the treating time is more than 15 hr, it is estimated that elution of a considerably large amount of lithium from the core particle X comprising the lithium nickelate composite oxide is initiated. The excessive humidification treatment causes transformation of the positive electrode active substance particles into particles comprising about 1200 ppm of water. Therefore, for example, the excessive humidification degree is quite different in a humidification one during the operation of the atomic layer deposition. The more preferred excessive humidification treatment conditions include a temperature of 15 to 30°C, a relative humidity of an ambient gas of 15 to 80%, and a treating time of 1 to 10 hr. In addition, in order to promote the chemical reaction for transforming the LiOH·H₂O produced after the excessive humidification treatment into Li₂CO₃, and prevent elution of lithium from the core particle X comprising the lithium nickelate composite oxide, the temperature of the heat treatment to be conducted in atmospheric air is preferably in the range of 200 to 450°C.

The aforementioned coating constituted of lithium carbonate according to the present invention may also be produced by subjecting the particles capable of being formed into the core particle X to excessive humidification treatment, and then to heat treatment in atmospheric air at a temperature of 150 to 500°C. After conducting the treatment for forming the coating constituted of lithium carbonate, it is necessary to conduct the treatment for producing the coating compound Y. In this case, the heat treatment conducted for forming the coating constituted of lithium carbonate may be the same as the heat treatment conducted for enhancing crystallinity of the coating compound Y. More specifically, after subjecting the particles capable of being formed into the core particle X to the excessive humidification treatment, the coating compound Y may be formed thereon by a vapor phase epitaxial growth method, followed by subjecting the resulting particles to the heat treatment in atmospheric air at a temperature of 150 to 500°C. Alternatively, after forming the coating compound Y on the particles capable of being formed into the core particle X and then subjecting the obtained particles to the excessive humidification treatment, the resulting particles may be subjected to the heat treatment in atmospheric air at a temperature of 150 to 500°C.

The formation of the aforementioned coating constituted of lithium carbonate according to the present invention is such a technology in which the residual LiOH is subjected to the excessive humidification treatment to convert the residual LiOH into LiOH·H₂O, and then the resulting LiOH·H₂O is subjected to low-temperature heat treatment in atmospheric air to convert the LiOH·H₂O into Li₂CO₃, and therefore the resulting coating constituted of lithium carbonate may be occasionally in the form of granules or a film. Examples of particle surface analysis methods used for identifying the crystal structure of the coating constituted of lithium carbonate include observation by STEM, observation by a high-resolution scanning electron microscope (SEM), elemental analysis in a depth direction by time-of-flight type secondary ion mass spectrometry, elemental analysis in a depth direction by X-ray photoelectron spectroscopy, etc.

Next, the non-aqueous electrolyte secondary battery using the lithium nickelate-based positive electrode active substance particles according to the present invention is described.

When producing a positive electrode sheet using the positive electrode active substance particles according to the present invention, a conducting agent and a binder are added to the positive electrode active substance particles and the mixed therewith by an ordinary method. Examples of the preferred conducting agent include carbon black, graphite and the like. Examples of the preferred binder include polytetrafluoroethylene, polyvinylidene fluoride and the like. As a solvent for mixing these components, for example, N-methyl pyrrolidone is preferably used. The slurry comprising the positive electrode active substance particles, the conductive agent and the binder is kneaded until it becomes a honey-like liquid. The resulting positive electrode mixture slurry is applied onto a current collector at a coating speed of about 60 cm/sec using a doctor blade having a groove width of 25 to 500 µm, and then the resulting coating layer formed on the current collector is dried at a temperature of 80 to 180°C for the purpose of removing the solvent therefrom and softening the binder. As the current collector, there may be used an Al foil having a thickness of about 20 µm. The current collector to which the positive electrode mixture has been applied is subjected to calendar roll treatment with a linear load of 0.1 to 3 t/cm, thereby obtaining the positive electrode sheet.

As a negative electrode active substance used in the battery, there may be used metallic lithium, lithium/aluminum alloys, lithium/tin alloys, graphite or the like. A negative electrode sheet is produced by the same doctor blade method as used upon production of the aforementioned positive electrode sheet, or a metal rolling method.

Also, as a solvent for preparation of an electrolyte solution, there may be used a combination of ethylene carbonate and diethyl carbonate, as well as an organic solvent comprising at least one compound selected from the group consisting of carbonates such as propylene carbonate and dimethyl carbonate, and ethers such as dimethoxyethane.

In addition, as the electrolyte solution, there may be used a solution prepared by dissolving lithium phosphate hexafluoride as well as at least one lithium salt selected from the group consisting of lithium perchlorate, lithium borate tetrafluoride and the like as an electrolyte in the aforementioned solvent.

In the secondary battery having a Li counter electrode which is produced by using the positive electrode active substance particles according to the present invention, the initial discharge capacity thereof until reaching 3.0 V after being charged to 4.4 V is respectively not less than 190 mAh/g as measured at 25°C. When the battery with the Li counter electrode is charged to 4.3 V, the battery usually exhibits a high voltage and therefore a high capacity, and as a result, it is possible to obtain a secondary battery having a high energy density. In addition, when the battery is discharged in the same voltage range at 0.5C in 20th, 40th, 60th, ... and 140th cycles and at 1C in the other cycles, the capacity retention rate thereof in the 140th cycle relative to the initial discharge capacity at a rate of 1C is not less than 90%, and the capacity retention rate thereof in the 141st cycle relative to the initial discharge capacity at a rate of 1C is not less than 85%. As a result, it is possible to obtain the secondary battery that is excellent in charge/discharge cycle characteristics upon charging at a high voltage.

### <Function>

The positive electrode active substance particles comprising the lithium nickelate composite oxide according to the present invention comprise the epitaxially grown coating compound Y formed by a vapor phase epitaxial growth method and subsequent heat treatments. The coating compound Y is very thin, and has a high degree of crystallinity, a high degree of epitaxy and a high coating ratio (coverage), so that the resulting secondary battery can be inhibited from suffering from occurrence of the side reactions while maintaining a high capacity when subjecting the secondary battery to repeated charge/discharge cycles. As a result, the positive electrode active substance particles according to the present invention can be suitably used as positive electrode active substance particles that have a high current density and are excellent in charge/discharge cycle characteristics, and therefore can be suitably used as those for a secondary battery.

### [EXAMPLES]

Specific examples of the present invention are described below.

### [Example 1]

Cobalt-containing nickel hydroxide Ni_{0.84}Co_{0.16}(OH)₂ as a precursor was obtained by a crystallization method via an ammonia complex in a water solvent over several days. The cobalt-containing nickel hydroxide, lithium hydroxide monohydrate LiOH·H₂O and aluminum hydroxide Al(OH)₃ were weighed in predetermined amounts such as the molar ratio between elements Li, Ni, Co and Al therein was Li:Ni:Co:Al = 1.02:0.81:0.15:0.04. Thereafter, these compounds were mixed with each other using a high-speed mixer, and the resulting mixture was calcined in an oxygen atmosphere at 770°C using a roller hearth kiln, thereby obtaining a lithium nickelate composite oxide capable of being formed into a core particle X.

The resulting particles capable of being formed into a core particle X were treated by an atomic layer deposition method. In the atomic layer deposition method, trimethyl aluminum Al(CH₃)₃ was used as a raw material gas A, and H₂O was used as a raw material gas B. The respective materials were subjected to 4 cycle treatment at 180°C, thereby obtaining lithium nickelate composite oxide particles including a coating compound Y.

Seventy (70) grams of the resulting lithium nickelate composite oxide particles including the coating compound Y were held in a 2 cubic feet (ft³) thermostatic vessel at a relative humidity of 50% for 2 hr while flowing the atmospheric air bubbled in water therethrough at a rate of 3 L/min at 25°C to subject the particles to humidification treatment and transform LiOH included therein into LiOH·H₂O. Successively, the resulting particles were subjected to heat treatment in atmospheric air at 350°C for 2 hr to transform the LiOH·H₂O into Li₂CO₃, thereby producing lithium nickelate composite oxide particles including the coating compound Y having a high degree of epitaxy which were coated with the Li₂CO₃. The thus obtained oxide particles were handled and used as positive electrode active substance particles.

The powder characteristics of the thus obtained positive electrode active substance particles comprising the lithium nickelate composite oxide according to the present invention were evaluated as follows. The results are shown in Tables 1 and 3.

The surface and shape of the sample were observed using a field emission type scanning electron microscope (FE-SEM) "S-4800" manufactured by Hitachi High-Technologies Corporation.

The sample was dried and deaerated at 250°C for 10 min in a nitrogen gas atmosphere, and then the BET specific surface area of the thus treated sample was measured using "Macsorb" manufactured by Quantachrome Instruments.

In order to identify crystal phases of the sample and calculate their crystal structure parameters thereof, the sample was measured using a powder X-ray diffraction apparatus "SmartLab 3kW" manufactured by Rigaku Co., Ltd. The X-ray diffraction pattern of the sample was measured by passing the sample through a monochromater under conditions of Cu-Kα, 40 kV and 44 mA, and the measurement was conducted by a step scanning method at a rate of 3 deg./min at the step intervals of 0.02° in the range of 20 (deg.) of 15 to 120 (15 ≤ 20 (deg.) ≤ 120). The crystallographic information data were calculated by the Rietveld method.

The median diameter D₅₀ as a volume-based average particle diameter of aggregated particle of the sample was measured using a laser diffraction scattering type particle size distribution meter "SALD-2201" manufactured by Shimadzu Corporation.

The amounts of LiOH and Li₂CO₃ in the sample were determined by using a Warder method based on calculation from a hydrochloric acid titration curve of a solution prepared by suspending the sample in a water solvent at room temperature. In the method, 10 g of the sample was suspended in 50 cc of water using a magnetic stirrer for 1 hr.

The 2% pH value of the sample was measured as follows. That is, 2 g of the sample was suspended in 100 cc of pure water at room temperature, and the pH value of the resulting suspension was measured using a pH meter at room temperature.

The contents of lithium and nickel as main component elements, as well as cobalt and aluminum as subsidiary component elements in the sample were determined as follows. That is, the sample particles were completely dissolved in hydrochloric acid, and the resulting solution was measured using an ICP emission spectroscopic apparatus (ICP-OES) "ICPS-7510" manufactured by Shimadzu Corporation by a calibration curve method.

Information concerning the crystal, morphology and chemical composition of each of the core particle X and the coating compound Y in the sample was obtained using STEM "JEM-ARM200F Cold FEG Model" manufactured by JEOL Ltd., EDS "JED-2300T Dry SDD 100mm" manufactured by JEOL Ltd., and EELS.

The CR2032 type coin cell manufactured by the following production method using the thus obtained positive electrode active substance particles was characterized as a secondary battery. The results are shown in Table 3.

The positive electrode active substance, acetylene black and graphite both serving as a conducting agent, and polyvinylidene fluoride as a binder were accurately weighed such that the weight ratio between these components was 90:3:3:4, and dispersed in N-methyl pyrrolidone, and the resulting dispersion was fully mixed using a high-speed kneading machine to prepare a positive electrode mixture slurry. Next, the positive electrode mixture slurry was applied onto an aluminum foil as a current collector using a doctor blade "PI-1210 film coater" manufactured by Tester Sangyo Co., Ltd., and then dried at 120°C, and the resulting sheet was pressed under a pressure of 0.5 t/cm, thereby obtaining a positive electrode sheet comprising the positive electrode active substance particles in the amount of 9 mg per 1 cm² of the positive electrode sheet. The thus obtained positive electrode sheet was punched into 16 mmφ, and the resulting sheet piece was used as a positive electrode.

A metallic lithium foil was punched into 16 mmφ and used as a negative electrode.

"CELGARD #2400" produced by Celgard, LLC., was punched into a size of 20 mmφ, and used as a separator. Moreover, a 1 mol/L LiPF₆ solution of a mixed solvent comprising ethylene carbonate and diethyl carbonate at a volume ratio of 1:1 was used as an electrolyte solution. These members were assembled to thereby produce coin cells of the CR2032 type.

In order to prevent the decomposition of the electrolyte solution or the metallic lithium by atmospheric air, the assembling of the battery was conducted in a glove box held in an argon atmosphere having a well-controlled dew point.

The initial discharge capacity of the battery at 25°C was measured using a charge/discharge tester "TOSCAT-3000" manufactured by Toyo System Co., Ltd., in such a condition that under a constant current of 0.1C, the lower limit of a discharge voltage thereof was set to 3.0 V, and the upper limit of a charge voltage thereof was set to 4.4 V. In addition, the battery was also subjected to 141 charge/discharge cycles test at 25°C under such a condition that the lower limit of a discharge voltage thereof was set to 3.0 V, and the upper limit of a charge voltage thereof was set to 4.4 V. In the 20th cycle, 40th cycle, 60th cycle, ... and 140th cycle tests, the battery was discharged at a constant current of 0.5C, whereas in the other cycle tests, the battery was discharged at a constant current of 1C to calculate a discharge capacity retention rate at the 140th cycle and a discharge capacity retention rate at the 141st cycle based on the initial discharge capacity.

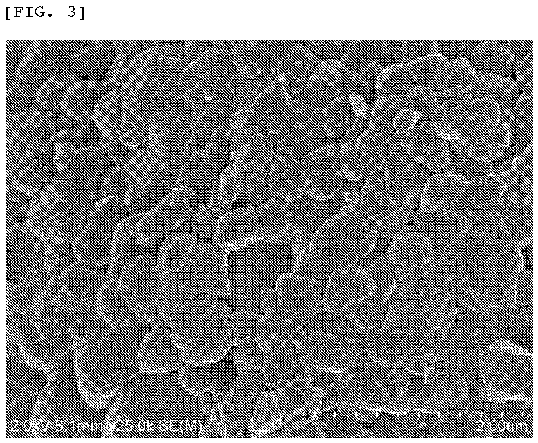

The resulting positive electrode active substance particles comprising the lithium nickelate composite oxide had an aggregated particle diameter of about 15 µm as observed in a low-magnification SEM micrograph of FIG. 2, and a primary particle diameter of about 300 nm as observed in a high-magnification SEM micrograph of FIG. 3. As a result of ICP compositional analysis and XRD phase analysis of the lithium nickelate composite oxide particles capable being formed into the core particle X which were obtained by the aforementioned solid state reaction, the lithium nickelate composite oxide particles had a composition of Li_{1.02}Ni_{0.81}Co_{0.15}Al_{0.04}O₂ having a layer structure. The lattice constant of the aforementioned particles was aₕₑₓ = 2.8651Å and cₕₑₓ = 14.186Å as represented by a hexagonal lattice thereof, and the crystallite size of the particles was 277 nm. The lattice constant and the crystallite size of the positive electrode active substance particles comprising the lithium nickelate composite oxide were the same as those of the lithium nickelate composite oxide particles capable of being formed into the core particle X. Therefore, the core particle X of the positive electrode active substance particles comprising the lithium nickelate composite oxide was regarded as a composition of Li_{1.02}Ni_{0.81}Co_{0.15}Al_{0.04}O₂ having a layer structure.

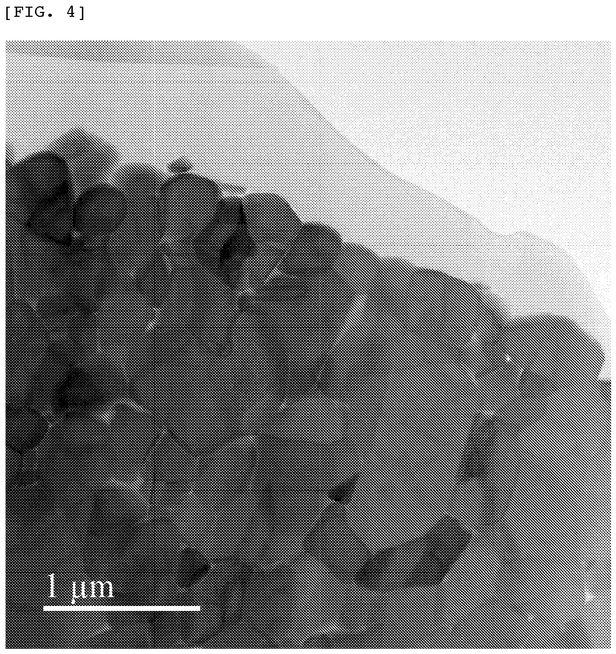

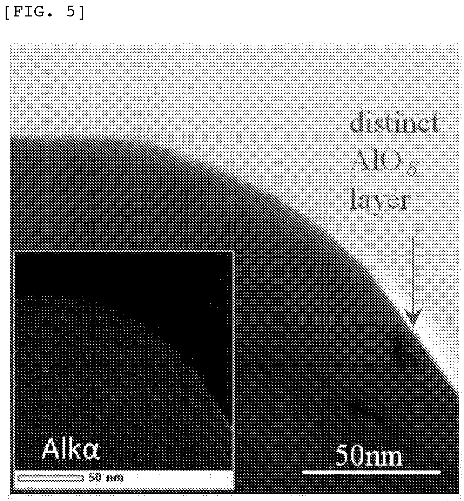

The resulting positive electrode active substance particles comprising the lithium nickelate composite oxide were subjected to analysis by STEM as shown in FIGS. 4 to 8. From the bright field image of FIG. 4, the crystal grains near the surface of the aggregated particles and the crystal grains within the aggregated particles both had a similar particle size of about 300 nm. The particle size was almost identical to the primary particle size measured by SEM as shown in FIG. 3 and the crystallite size obtained from X-ray diffraction analysis. From the bright field image and the intensity ratio map of Al element (kα-ray) as shown in FIG. 5, it was found that a layer of the coating compound Y comprising an Al element was formed over a distance of about 50 nm on the right side outermost surface of the core particle X constituted of the lithium nickelate composite oxide. It should be noted that for example, even though any strong intensity of Al was undetected by EDS on the upper side outermost surface of the core particle X, this does not immediately mean that no coating compound Y is present thereon. When further observing the sample at higher magnifications, there was often caused such a case where the coating compound Y was detected thereon though it was present only in a slight amount.

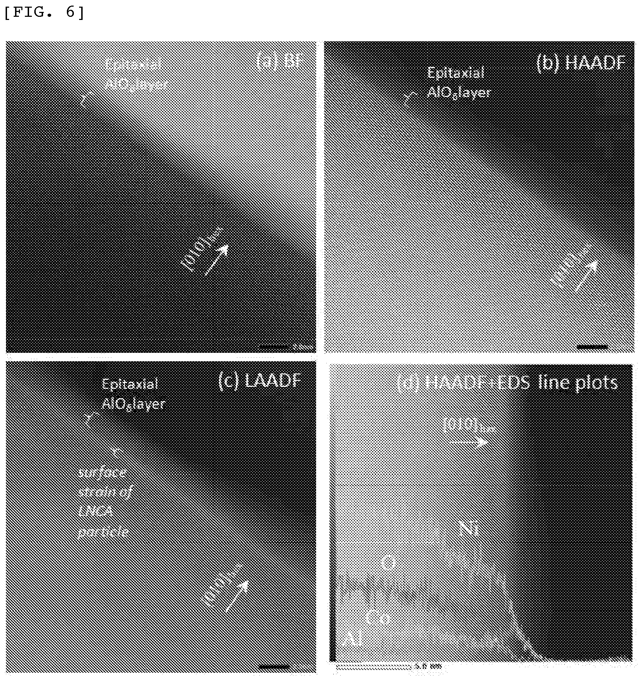

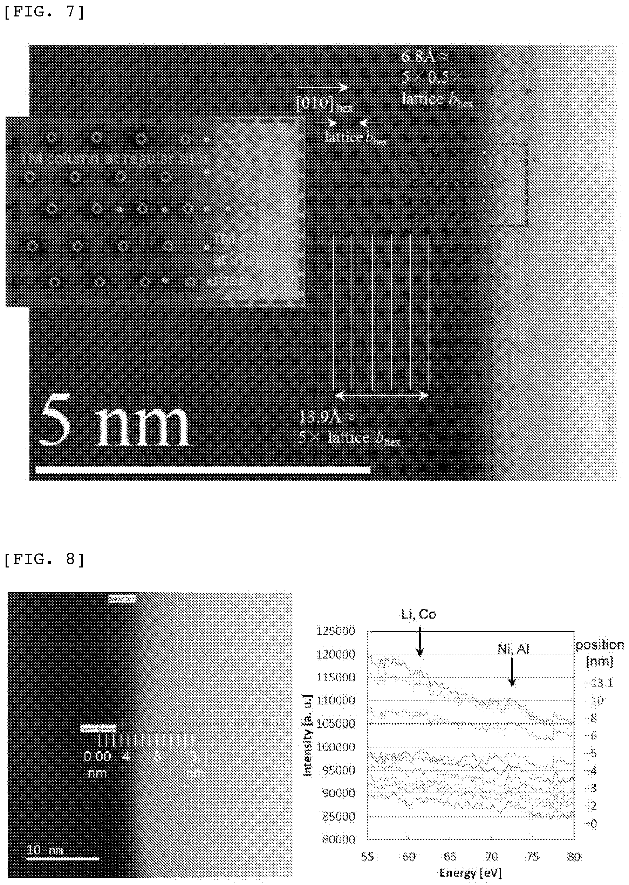

The method of evaluating a film thickness of the coating compound Y in the resulting positive electrode active substance particles shown in FIG. 6 is described as follows. The particle shown in FIG. 6 corresponds to the particle C described in Table 1. On the right-upper side of the BF image shown in FIG. 6(a), there was present a resin (or vacuum), and on the left-lower side thereof, there was present the core particle X, and further the coating compound Y was present on a boundary surface between the resin (or vacuum) and the core particle X. The black points shown in the positions corresponding to the core particle X indicate atomic columns derived from Ni, Co and Al which are arranged in the direction perpendicular to the paper. As calculated from the positions of the black points of the core particle X, the crystal zone axis of the core particle X is present in [2 1 1]ₕₑₓ. In FIG. 6(a), the lattice b direction ([0 1 0]ₕₑₓ) of the core particle X is indicated by the arrow. As shown in FIG. 1, the observation in the crystal zone axis [2 1 1]ₕₑₓ is carried out from the direction parallel with the (-1 2 0) plane. When in the crystal grains of the core particle X having a layer structure, the crystal plane parallel with the atomic layer is referred to as a basal plane and the crystal plane perpendicular to the atomic layer is referred to as an edge plane (see FIG. 1), the aforementioned boundary surface shown in FIG. 6(a) corresponds to the edge plane of the core particle X. In the HAADF image of FIG. 6(b) and the LAADF image of FIG. 6(c) obtained together with the BF image of FIG. 6(a), the same crystal zone axes are shown, and the positions of the black points shown in FIG. 6(a) are almost consistent with the positions of the white points shown in FIGS. 6(b) and 6(c). From the HAADF image, the positions of the atomic columns derived from Ni, Co and Al were accurately determined, and it was confirmed that no patterns corresponding to equal thickness fringes were present outside of the core particle X in the BF image. As explained in FIG. 7, the coating compound Y was crystalized and epitaxially grown. The whitely brightened positions in the LAADF image correspond to a crystal lattice strain, and the core particle X as a backing of the coating compound Y was provided on an outermost surface thereof with a distorted layer having a thickness of 0.55 nm and a width of 23 nm. It is estimated that the aforementioned crystal lattice strain is caused by the mismatch of the lattice constants between the core particle X and epitaxially grown coating compound Y. However, it may also be interpreted that the crystal lattice strain suggests the presence of the coating compound Y. In the BF image shown in FIG. 6(a), the thickness of the coating compound Y grown along the edge plane of the core particle X of the particle C was 1.2 nm as an average value calculated from four values measured at 4 positions thereon.

FIG. 6(d) shows the HAADF image obtained by rotating FIG. 6(b) by 55° in the clockwise direction. The linear portion shown in a central portion of FIG. 6(d) was subjected to compositional line analysis by EDS, and the obtained line profile in which the intensity was plotted on an ordinate axis thereof, and an abscissa axis thereof was aligned with that of the HAADF image was inserted into a lower portion of FIG. 6(d). The line profile showed respective curves of intensity values of Ni, O, Co and Al in this order, and the order of intensity values well reflects the order of the chemical composition ratios of the respective elements except for O in the core particle X. In the line profile, the intensity of the respective elements except for Al was higher on the left side thereof, and was gradually decreased towards the right side of the line profile and rapidly dropped in the vicinity of the coating compound Y, and then reached 0 in the resin (vacuum) portion. The sample observed was processed into a thickness of about 100 nm. However, strictly speaking, the thickness of the sample observed was reduced in the direction towards the resin (vacuum). This is the reason why the aforementioned gradual reduction in intensity of the line profile was caused. On the other hand, the line profile intensity derived from Al had the profile whose peak was present in the vicinity of the coating compound Y. This indicates that the coating compound Y was apparently present in the sample observed. However, since the line analysis by EDS showed a large error in the distance direction owing to the very small thickness of the coating compound Y, and it is therefore considered that the profile having the aforementioned peak became broad. When calculated from the intensity ratio of the line profile, the ratio of the number of atoms of Al to the number of atoms of Ni (Al/Ni) which becomes highest in the vicinity of the coating compound Y was 3.0 as shown in Table 1. It is expected that when the error of the line analysis by EDS is lessened, the still higher Al/Ni ratio is obtained, and the amount of Ni being present in the sample is very small.

FIG. 7 is a view obtained by enlarging the BF image shown in FIG. 6(a) so as to permit analysis of the coating compound Y. The distance between the black points arranged in the horizontal direction of FIG. 7 corresponds to a lattice constant bₕₑₓ (=lattice constant aₕₑₓ) . As shown in FIG. 7, the actually measured distance between the five rows arranged in the direction [0 1 0]ₕₑₓ in the core particle X was 13.9 Å which is almost consistent with 5 x bₕₑₓ (= 14.3 Å). The coating compound Y had crystal planes arranged in the direction perpendicular to the aforementioned direction [0 1 0]ₕₑₓ, and the interplanar spacing therebetween was almost equal to a half value of the lattice constant bₕₑₓ. FIG. 7 shows that the crystal planes of the coating compound Y were present with such a structure that the five atomic layers were arranged with a layer thickness of 6.8 Å (≈ 0.5 x 5 x bₕₑₓ = 7.2 Å). In the core particle X, the crystal planes constituted of transition metals which are perpendicular to the direction [0 1 0]ₕₑₓ were also present at a spacing that is equal to a half value of the lattice constant bₕₑₓ. Owing to the BF image, it is estimated that the aforementioned five layers in the coating compound Y were derived from heavy atoms, and from the results of the aforementioned line analysis by EDS, they were derived from Al. Accordingly, it is considered that the five atomic layers in the aforementioned coating compound Y were observed in any of the crystal zone axis [1 1 0] of γ-Al₂O₃ and the crystal zone axis [2 1 1] of α-LiAlO₂. Therefore, it is recognized that the coating compound Y was formed by epitaxial growth of crystalline γ-Al₂O₃ (or α-LiAlO₂ or an intermediate product thereof) against the core particle X as shown in Table 1. Meanwhile, as more apparently recognized from the enlarged view of a portion of the BF image surrounded by the dotted line, the black points derived from the atomic columns of Ni, Co and Al were marked and represented by an outline circle (open circle). Whereas, the portions where columns of heavy atoms were formed at sites corresponding to columns of Li atoms, i.e., the portions where a white part at a mid position between the black points was tinted blackish were respectively marked and represented by a solid circle (filled circle). The portions marked by the solid circle indicate atomic columns formed owing to cation mixing of Ni²⁺ ions which tend to cause deterioration in capacity of a secondary battery, but has a possibility of providing improved results of the charge/discharge cycle test due to a pillar effect thereof.

FIG. 8 shows the HAADF image on a left side thereof, and EELS spectra at each distance on the line as the results of the line analysis, on a right side thereof. In the HAADF image, the left black portion thereof indicates the resin (or vacuum), and the right white portion thereof indicates the core particle X, and further the coating compound Y is present on a boundary surface between the resin (or vacuum) and the core particle X. The EELS spectra were shown in the order in which the spectrum at a smaller distance value is indicated at a lower position of the figure. If the peak derived from Li is observed at the position corresponding to the layer of the coating compound Y at a distance of 4 or 5 nm, there is a possibility that the coating compound Y comprises the element Li.

The other core particles were subjected to the same STEM observation as described above. The respective core particles thus observed were successively labeled as A to K in this order and shown in Table 1. The crystal zone axes and crystal planes of the core particles X thus observed were variously changed, and therefore the observation was regarded as being made from all directions of the core particle X. The STEM image of the particle G failed to find out the positions corresponding to the coating compound Y, and even the EDS analysis thereof showed that the ratio of the number of atoms of Al to the number of atoms of Ni (Al/Ni) was as small as 0.4. Thus, it was not possible to confirm the presence of the coating compound Y. The main element constituting the coating compound Y was Al, and the average value of the ratios of the number of atoms of Al to the number of atoms of Ni (Al/Ni) by and the EDS line analysis was as high as 1.7. The calculation of the average value of the ratios Al/Ni was made without taking the ratios of the number of atoms of Al to the number of atoms of Ni (Al/Ni) of the particles H and K as unmeasured particles as well as the ratio of the number of atoms of Al to the number of atoms of Ni (Al/Ni) of the particle G as particles on which no coating compound Y was detected, into consideration. The degree of crystallinity and the degree of epitaxy of the coating compound Y were calculated based on the particles on which the coating compound Y was detected. That is, it was confirmed that the coating compound Y was present on all of the measured particles except for the particle G, and all of the particles except for the particle K were provided thereon with the crystallized and epitaxially grown coating compound Y. Therefore, the degree of crystallinity and the degree of epitaxy of the coating compound Y was 90%. Assuming that the film thickness of the coating compound Y formed on the particle G was 0 nm, the average film thickness of the coating compounds Y formed on the particles A to K was 0.8 nm.

In this STEM observation, the particles were selected in a random manner. However, the data concerning the one particle for which no crystal habit was determined upon the observation and no presence of the coating compound Y was determined by EDS were omitted from the Table. Such particle was regarded as being the position where no coating compound Y was present. As a result of calculating the coating ratio (coverage) of the coating compound Y on the core particle from the aforementioned data, it was confirmed that in 10 kinds per 12 kinds of particles, coating compounds Y are present thereon. Accordingly, the coating ratio (coverage) of the coating compound Y was 83% (see Table 3).

In order to examine the thus obtained coating ratios (coverage), the coating compound Y on the surface of the respective sample particles was dissolved, and the resulting solution was subjected to the elemental analysis by ICP-OES. More specifically, there was conducted such a method in which the coating compound Y was dissolved in alkaline water at a high temperature to thereby disperse 5 g of the sample in 100 cc of pure water, followed by boiling and then cooling the resulting dispersion. The Al content detected was 121 ppm. On the other hand, as calculated from the measured D₅₀ as well as the film thickness and density (3.7 g/cc) of the coating compound Y, the Al content was 127 ppm upon 100% coating, and therefore the coating ratio (coverage) of the coating compound Y was 95%. This value was approximately consistent with the value shown in Table 3.

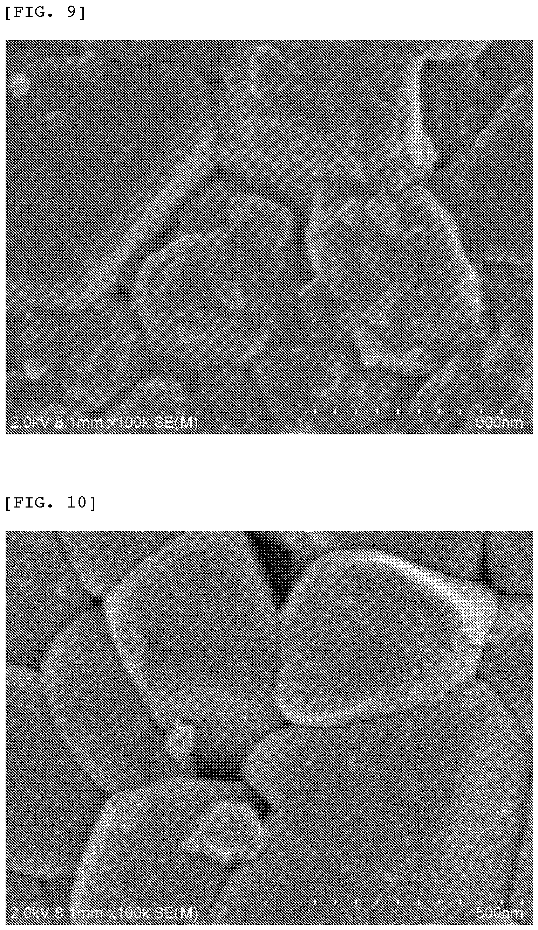

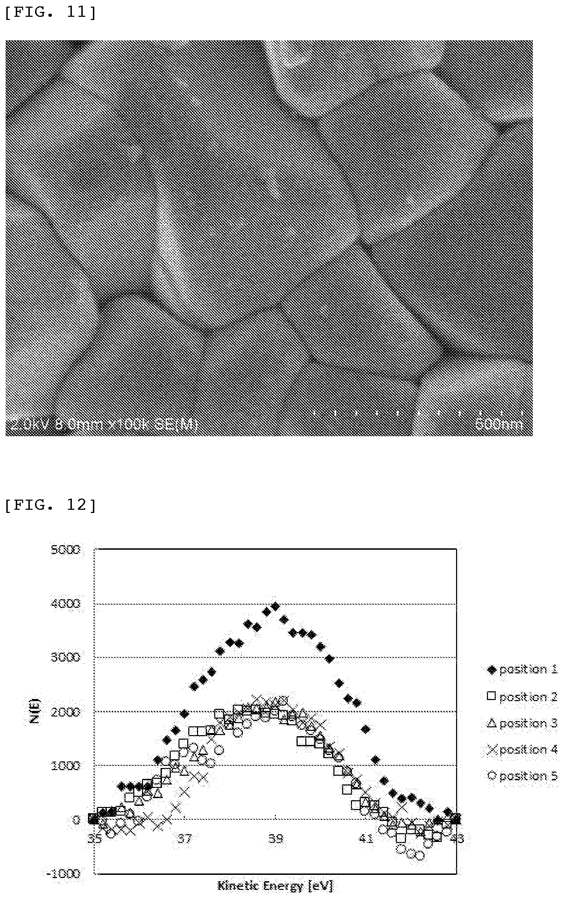

The morphology of the residual lithium carbonate in the obtained positive electrode active substance particles comprising the lithium nickelate composite oxide were evaluated as follows. That is, as shown in FIG. 9 by the SEM microphotograph with an ultrahigh magnification (x 100 k) of the obtained positive electrode active substance particles comprising the lithium nickelate composite oxide, foreign materials of about 50 nm were observed on the surface of the positive electrode active substance particles. However, as shown in FIG. 10 by the SEM microphotograph with an ultrahigh magnification (x 100 k) of the positive electrode active substance particles comprising the lithium nickelate composite oxide which were obtained after being washed with water, almost no foreign materials of about 50 nm were observed on the surface of the positive electrode active substance particles. In addition, as shown in FIG. 11 by the SEM microphotograph with an ultrahigh magnification (x 100 k) of the lithium nickelate composite oxide particles capable of being formed into the core particle X (the below-mentioned particles of Comparative Example 1), the lithium nickelate composite oxide primary particles of about 300 nm were observed similarly to FIG. 10. As a result of subjecting the water used upon washing the particles with water to the elemental analysis using an ICP emission spectroscopic apparatus, Li and Al were detected. For this reason, the foreign materials of about 50 nm as shown in FIG. 9 were regarded as lithium carbonate, and it was estimated that the lithium nickelate composite oxide was coated with the lithium carbonate.

The morphology of the coating compound Y in the obtained positive electrode active substance particles comprising the lithium nickelate composite oxide were evaluated as follows by Auger electron spectroscopy (AES) similar to X-ray photoelectron spectroscopy. That is, the sample was subjected to no particular pretreatment, and a double-sided adhesive carbon tape was attached onto a sample support table, and the sample was fixed on the table through the tape. Using AES "JAMP-9500" manufactured by JEOL Ltd., an optionally selected portion (about 10 nmφ) of the surface of the sample was measured in the range of 0.2 to 3 nm in a depth direction thereof (so-called point analysis) under the conditions including an acceleration voltage of 10 keV, an illumination current of 10 nA, an energy resolution ΔE/E of about 0.3%, a sample inclination angle of 30 degrees(°) and an observation magnification of 20,000 to 40,000 times. Here, the range measured in the depth direction of the sample is depending upon the energy of the Auger electron obtained, and in the case of the element Li, the range measured in the depth direction of the sample is about 0.3 nm.

First, qualitative analysis of the elements having an energy band in a wide range of 10 to 1500 eV was conducted by a wide scanning method (interval: 1 eV; repeated frequency: 5 times; time period: about 15 min). Next, in order to conduct quantitative analysis of the elements, the measurement took place in the ranges from 20 to 60 eV for the element Li, from 200 to 300 eV for the element C, from 456 to 539 eV for the element O, from 620 to 870 eV for the elements Ni and Co and from 1368 to 1406 eV for the element Al by a split scanning method (interval: 0.2 eV; repeated frequency: 5 times; time period: about 15 min). In the obtained spectrum diagram, a kinetic energy E (unit: eV) of the Auger electron was plotted on an abscissa axis thereof, whereas the number N(E) of the electrons detected was plotted on an ordinate axis thereof. The background was removed from the resulting spectra for the respective elements by a linear method, and the spectra were subjected to fitting based on the Gauss function. The differential curve of the thus obtained fitting curve was obtained by plotting the kinetic energy E of the Auger electron on the abscissa axis and the differential value d[N(E)]/dE on the ordinate axis to thereby convert the difference between a maximum value and a minimum value thereof into numerical values which are shown in Table 4.

Meanwhile, as to the spectral analysis by Auger electron spectroscopy, the reference was made to the following literature:
K. Tsutsumi et al., "JOEL News", Vol. 49, 2014, pp. 59-72.

In the obtained spectrum diagram of the Auger electron, the main peak positions of the respective Auger electrons are as follows. That is, the main peaks were observed at 39 eV in the case of the KLL Auger electron of the element Li, at 258 to 262 eV in the case of the KLL Auger electron of the element C, at 506 eV in the case of the KLL Auger electron of the element O and at 1383 eV in the case of the KLL Auger electron of the element Al. Although the peak position of the LMM Auger electron of the element Ni was observed at 840 eV, no quantification of the spectra of the Auger electron of the element Co was performed this time. This is because the position of the Auger electron of the element Co is overlapped with the peak position of the Auger electron of the element Ni (for example, the peak indicated at about 770 eV). FIG. 12 shows AES spectra from which the background was removed by a linear method. As shown in FIG. 12, the kinetic energy E of the Auger electron was plotted on an abscissa axis thereof, whereas the number N(E) of the electrons detected was plotted on an ordinate axis thereof, in which the peaks derived from the KLL Auger electron of the element Li indicating a maximum value at 39 eV were observed.

Table 4 shows the results of the point analysis conducted at optional 5 points of the obtained respective positive electrode active substance particles comprising the lithium nickelate composite oxide. That is, in Table 4, there is shown the difference between a maximum value and a minimum value on a differential curve of the spectra of the Auger electron of the element Ni. In addition, the difference between a maximum value and a minimum value in the differential curve of the spectra of the Auger electron of the respective elements was calculated to determine a ratio of the thus calculated difference value to the aforementioned difference value concerning the element Ni, and the respective ratios thus determined are shown as Li/Ni, C/Ni, O/Ni and Al/Ni in FIG. 4. Similarly, in Table 4, there are shown the results of the AES point analysis conducted at 4 points of the lithium nickelate composite oxide particles capable of being formed into the core particle X (the below-mentioned particles of Comparative Example 1). Meanwhile, only in the AES point analysis at the position 4 of Comparative Example 1, an amorphous particle of about 50 nm was selected from the surface of the positive electrode active substance particle, and with respect to the other positions 1 to 3, the surface of the positive electrode active substance particle was selected. Therefore, the values of Ni and Al/Ni at the position 4 were low, and the aforementioned amorphous particle was regarded as being constituted of lithium carbonate. In Comparative Example 1, the ratio of Li/Ni was 0. This might be because no Li was present on an outermost surface of the positive electrode active substance particle. As a result, the resulting battery had such an undesirable condition that Li was replenished from an electrolyte solution under operation of the battery.

The high ratio Al/Ni of Example 1 as compared to that of Comparative Example 1 was caused by the coating compound Y. Since the values of the ratio Li/Ni and Ni in Example 1 were also high, it is estimated that the coating compound Y of Example 1 was reacted with Li or Ni, and the coating compound Y had a crystal structure close to α-LiAlO₂ in which Ni was included in the form of a solid solution therewith. In addition, it is also estimated that the battery obtained in Example 1 was kept in such a state that insertion and desertion of the electrons or Li were likely to easily occur under operation of the battery. On the other hand, in the explanation of FIGS. 9 to 11, notwithstanding that the coating constituted of lithium carbonate was present in the particles obtained in Example 1, the value of the ratio C/Ni was low. The reason therefor is considered to be that there was a possibility that the coating compound Y was also present on the lithium carbonate.

The powder characteristics and the battery characteristics of the obtained positive electrode active substance particles comprising the lithium nickelate composite oxide are shown in Table 3. The contents of the residual lithium hydroxide and lithium carbonate in the positive electrode active substance particles both were low, and the ratio between the contents of the residual lithium hydroxide and lithium carbonate was not less than 0.9. The initial capacity of the resulting battery upon charging at a high voltage of 4.4 V was about 190 mAh/g, the capacity retention rate of 140th cycle characteristics of the battery at the same charge voltage was not less than 90%, and the capacity retention rate of the 141st cycle characteristics of the battery was not less than 85%.

### [Example 2]

Using the lithium nickelate composite oxide Li_{1.02}Ni_{0.81}Co_{0.15}Al_{0.04}O₂ having a layer structure capable of being formed into the core particle X which were obtained in Example 1, a coating compound Y was formed thereon by an atomic layer deposition method. The treating conditions used in the atomic layer deposition method were the same as those used in Example 1, i.e., trimethyl aluminum Al(CH₃)₃ was used as a raw material gas A, and H₂O was used as a raw material gas B, and these raw materials were subjected to 4 cycle treatment at 180°C. Thereafter, the obtained particles were treated in atmospheric air at 350°C for 2 hr to increase the degree of crystallinity of the coating compound Y. The thus obtained particles were the lithium nickelate composite oxide particles that were provided thereon with the coating compound Y having a high degree of epitaxy. The resulting composite oxide particles were used as positive electrode active substance particles and evaluated by the following method.

As recognized from the results of the STEM observation shown in Table 2, the 11 kinds of the particles A to K were observed and analyzed as the core particle X by the same method as used in Example 1. From various crystal zone axes and crystal planes of the core particles as observed, the observation was regarded as being made from all directions of the respective core particles. The coating compound Y was formed on all of the aforementioned 11 kinds of the particles. The average value of the ratios of the number of atoms of Al to the number of atoms of Ni (Al/Ni) in the coating compound Y was 1.9. The degree of crystallinity of the coating compound Y was 73%, the degree of epitaxy of the coating compound Y was 73%, and the average film thickness of the coating compounds Y formed thereon was 0.9 nm. Upon the STEM observation, the particles were selected in a random manner similarly to Example 1. However, the one particle for which no crystal habit was determined upon the observation and no presence of the coating compound Y was determined by EDS was omitted from Table 2. Such particle was regarded as being the position where no coating compound Y was present. As a result of calculating the coating ratio (coverage) of the coating compound Y on the core particle, it was confirmed that in 11 kinds per 12 kinds of particles, coating compounds Y are present thereon. Accordingly, the coating ratio (coverage) of the coating compound Y was 92% (see Table 3).

In order to examine the thus obtained coating ratio (coverage) of the coating compound Y on the core particle, using the same method as used in Example 1, the sample was dissolved in alkaline water at a high temperature so that it was confirmed that the Al content of the coating compound Y was 113 ppm. On the other hand, as calculated from the measured D₅₀ as well as the film thickness and density (3.7 g/cc) of the coating compound Y, the Al content of the coating compound Y was 152 ppm upon 100% coating, and therefore the coating ratio (coverage) of the coating compound Y was 74%. This value was approximately consistent with the value shown in Table 3.

### [Comparative Example 1]

The lithium nickelate composite oxide Li_{1.02}Ni_{0.81}Co_{0.15}Al_{0.04}O₂ having a layer structure as obtained in Example 1 which was capable of being formed into the core particle X was used as positive electrode active substance particles without being subjected to any surface treatment. As shown in Table 3, the powder characteristics of the obtained positive electrode active substance particles were as follows, i.e., the content of LiOH therein was more than 0.5 and the intensity ratio of Li₂CO₃/LiOH was less than 0.9, and therefore the electrode slurry was likely to suffer from gelation. Ten (10) particles were randomly selected from the particles near the surface of the aforementioned positive electrode active substance particles by the STEM observation. As a result of subjecting the thus selected particles to the EDS analysis, the presence of an excessive amount of Al was not confirmed. Accordingly, the coating ratio (coverage) of the coating compound Y on the respective positive electrode active substance particles was 0%. In addition, with respect to the battery characteristics, although the initial discharge capacity was high, the discharge capacity retention rate at the 140th cycle was less than 90%, and the discharge capacity retention rate at the 141st cycle was less than 85%. Therefore, the positive electrode active substance particles were deteriorated in the battery characteristics thereof.

### [Comparative Example 2]

The sample retrieved in the course of the production process in Example 1, i.e., the sample obtained after the treatment by an atomic layer deposition method was used as a positive electrode active substance. Ten (10) particles were randomly selected from the particles near the surface of the aforementioned positive electrode active substance particles by STEM observation. As a result of subjecting the thus selected particles to the EDS analysis, the presence of an excessive amount of Al was confirmed at a high frequency. As recognized from the powder characteristics and battery characteristics shown in Table 3, the positive electrode active substance had a high lithium hydroxide content as well as a high 2% powder pH value, and therefore the resulting secondary battery exhibited poor cycle characteristics.

### [Comparative Example 3]

The lithium nickelate composite oxide capable of being formed into the core particle X as used in Example 1 was treated in a mixed gas comprising air and CO₂ at a volume ratio of air:CO₂ = 3:1 at 250°C for 2 hr. In Comparative Example 3, no treatment by an atomic layer deposition method was conducted. As a result, although the content of the residual LiOH in the lithium nickelate composite oxide was less than 0.5, the resulting secondary battery failed to exhibit good cycle characteristics.

**Table 1**

| label as observed core particle X | Example 1 | | | | | |
|---|---|---|---|---|---|---|
| | zone axis of core particle X | surface plane of core particle X | coating compound Y (major element: Al) | | | |
| | | | Al/Ni | crystallinity | degree of epitaxy | thickness |
| | | | [atomic ratio] | | [%] | [nm] |
| A | [2 1 1]ₕₑₓ | edge | 0.8 | crystal | epitaxy | 1.2 |
| B | [2 1 1]ₕₑₓ | edge | 3.2 | crystal | epitaxy | 0.3 |
| G | [2 1 1]ₕₑₓ | edge | 3.0 | crystal | epitaxy | 1.2 |
| E | [-4 4 1]ₕₑₓ | t the others | 1.4 | crystal | epitaxy | 0.5 |
| E | [-4 4 1]ₕₑₓ | the others | 1.5 | crystal | epitaxy | 0.5 |
| F | [1 0 0]ₕₑₓ | edge | 1.6 | crystal | epitaxy | 0.9 |
| G | [1 0 0]ₕₑₓ | edge | 0.4 | none | | 0 |
| H | [1 0 0]ₕₑₓ | basal | - | crystal | epitaxy | 0.7 |
| I | [1 0 0]ₕₑₓ | edge | 1.0 | crystal | epitaxy | 0.5 |
| J | [11 7 1]ₕₑₓ | the others | 1.3 | crystal | epitaxy | 2.2 |
| K | [1 0 0]ₕₑₓ | edge | - | amorphous | | 0.4 |
| Average | Observation from every direction | | Average Al/Ni : 1.7 | degree of crystallinity 90% | degree of epitaxy : 90% | Average thickness: 0.8 nm |

**Table 2**

| label as observed core particle X | Example 2 | | | | | |
|---|---|---|---|---|---|---|
| | zone axis of core particle X | surface plane of core particle X | coating compound Y (major element: Al) | | | |
| | | | Al/Ni | crystallinity | degree of epitaxy | thickness |
| | | | [atomic ratio] | | [%] | [nm] |
| A | [1 0 0]ₕₑₓ | basal | - | amorphous | | 0.5 |
| B | [1 0 0]ₕₑₓ | edge | 1.5 | crystal | epitaxy | 2.0 |
| G | [1 0 0]ₕₑₓ | basal | 1.3 | | amorphous | 1.1 |
| D | [4 -1 -1]ₕₑₓ | the others | 3.8 | crystal | epitaxy | 1.1 |
| E | [2 7 1]ₕₑₓ | the others | 0.9 | crystal | epitaxy | 0.9 |
| F | [1 0 0]ₕₑₓ | basal | - | crystal | epitaxy | 0.8 |
| G | [1 0 0]ₕₑₓ | edge | - | crystal | epitaxy | 0.5 |
| H | [1 0 0]ₕₑₓ | basal | - | crystal | epitaxy | 0.7 |
| I | [2 7 1]ₕₑₓ | the others | 1.5 | crystal | epitaxy | 0.9 |
| J | [4 -1 -1]ₕₑₓ | the others | 1.5 | amorphous | | 0.4 |
| K | [2 7 1]ₕₑₓ | the others | 3.0 | crystal | epitaxy | 1.5 |
| Average | Observation from every direction | | Average Al/Ni : 1.9 | degree of crystallinity : 73% | degree of epitaxy : 73% | Average : 0.9 nm |

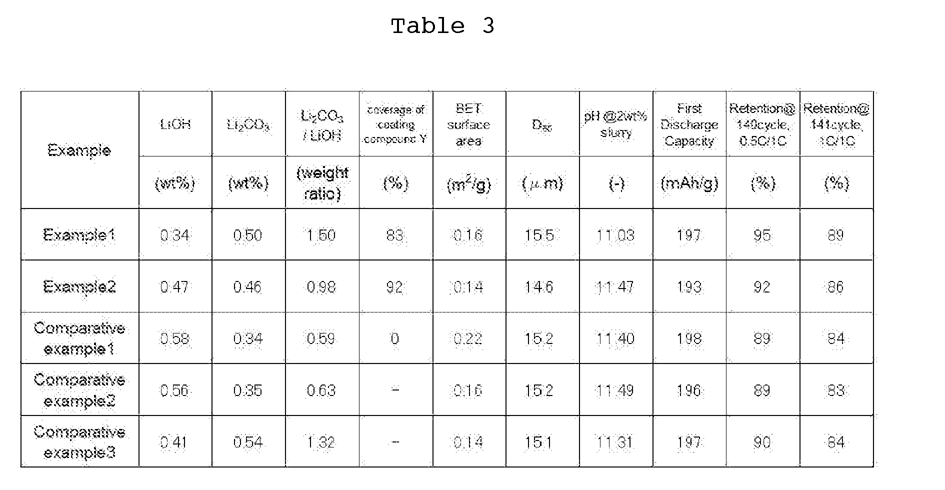

It was confirmed that the lithium nickelate-based positive electrode active substance particles according to the present invention were in the form of positive electrode active substance particles that comprise a core particle X comprising a lithium nickelate composite oxide having a layer structure and a coating compound Y having a high degree epitaxy. In addition, it is recognized that the resulting secondary battery has battery characteristics including a high battery capacity owing to charging at a high voltage and high charge/discharge cycle characteristics, and therefore is a high performance battery.

### INDUSTRIAL APPLICABILITY

In accordance with the present invention, there are provided positive electrode active substance particles comprising a lithium nickelate composite oxide as well as the non-aqueous electrolyte secondary battery, in which a thin film-shaped coating compound having a high degree of epitaxy is formed on a positive electrode active substance, so that the resulting provided positive electrode active substance particles are excellent in charge/discharge cycle characteristics upon charging at a high voltage while maintaining a high energy density. The lithium nickelate-based positive electrode active substance particles have an extremely low content of lithium hydroxide as an impurity, and the resulting secondary battery exhibits a long service life and has a high energy density.

## Claims

1. Positive electrode active substance particles each comprising:
a core particle X comprising a lithium nickelate composite oxide having a layer structure which is represented by the formula:
Li₁₊ₐNi_{1-b-c}Co_{b}M_{c}O₂
wherein M is at least one element selected from the group consisting of Mn, Al, B, Mg, Ti, Sn, Zn and Zr; a is a number of -0.1 to 0.2 (-0.1 ≤ a ≤ 0.2); b is a number of 0.05 to 0.5 (0.05 ≤ b ≤ 0.5); and c is a number of 0.01 to 0.4 (0.01 ≤ c ≤ 0.4); and
a coating compound Y comprising at least one element selected from the group consisting of Al, Mg, Zr, Ti and Si,
in which the coating compound Y has an average film thickness of 0.2 to 5 nm, a degree of crystallinity of 50 to 95%, a degree of epitaxy of 50 to 95% and a coating ratio i.e. coverage, of 50 to 95%.

2. The positive electrode active substance materials according to claim 1, wherein a, b and c are such that -0.08 ≤ a ≤ 0.18, 0.10 ≤ b ≤ 0.4 and 0.02 ≤ c ≤ 0.35.

3. The positive electrode active substance particles according to either claim 1 or claim 2, wherein the coating compound Y has an average film thickness of 0.22 to 1.0 nm, a degree of crystallinity of 70 to 93%, a degree of epitaxy of 70 to 93% and a coating ratio i.e. coverage, of 70 to 93%.

4. The positive electrode active substance particles according to any one of claims 1 to 3, wherein an average value of a ratio of a total number of atoms of elements Al, Mg, Zr, Ti and Si in the coating compound Y to a number of atoms of an element Ni in the coating compound Y is not less than 0.5.

5. The positive electrode active substance particles according to any one of claims 1 to 4, which are in the form of positive electrode active substance particles that are further coated with lithium carbonate.

6. The positive electrode active substance particles according to any one of claims 1 to 5, wherein a content of lithium hydroxide LiOH in the positive electrode active substance particles is not more than 0.50% by weight; a content of lithium carbonate Li₂CO₃ in the positive electrode active substance particles is not more than 0.65% by weight; and a weight ratio of the content of lithium carbonate to the content of lithium hydroxide is not less than 0.9.

7. The positive electrode active substance particles according to any one of claims 1 to 6, wherein the positive electrode active substance particles have a BET specific surface area of 0.05 to 0.70 m²/g.

8. The positive electrode active substance particles according to any one of claims 1 to 7, wherein a median diameter D₅₀ of aggregated particles of 1 to 30 µm.

9. The positive electrode active substance particles according to any one of claims 1 to 8, which have a 2 wt % powder pH value of not more than 11.6.

10. A positive electrode sheet comprising the positive electrode active substance particles according to any one of claims 1 to 9, a conducting agent and a binder.

11. A non-aqueous electrolyte secondary battery comprising a positive electrode active substance comprising at least partially the positive electrode active substance particles according to any one of claims 1 to 9.

12. Use of the positive electrode active substance particles as defined in any one of claims 1 to 9 in a non-aqueous electrolyte secondary battery.

## Patentansprüche

1. Teilchen der aktiven Substanz der positiven Elektrode, die jeweils Folgendes umfassen:
ein Kernteilchen X, umfassend ein Lithium-Nickelat-Verbundoxid mit einer Schichtstruktur, die durch die folgende Formel dargestellt ist:
Li₁₊ₐNi_{1-b-c}Co_{b}M_{c}O₂
wobei M mindestens ein Element ist, ausgewählt aus der Gruppe bestehend aus Mn, Al, B, Mg, Ti, Sn, Zn und Zr; a eine Zahl von -0,1 bis 0,2 (-0,1 ≤ a ≤ 0,2) ist; b eine Zahl von 0,05 bis 0,5 (0,05 ≤ b ≤ 0,5) ist; und c eine Zahl von 0,01 bis 0,4 (0,01 ≤ c ≤ 0,4) ist; und
eine Beschichtungsverbindung Y, umfassend mindestens ein Element, ausgewählt aus der Gruppe bestehend aus Al, Mg, Zr, Ti und Si,
in der die Beschichtungsverbindung Y eine durchschnittliche Filmdicke von 0,2 bis 5 nm, einen Kristallinitätsgrad von 50 bis 95 %, einen Epitaxiegrad von 50 bis 95 % und ein Beschichtungsverhältnis, d. h. eine Abdeckung, von 50 bis 95 % aufweist.

2. Materialien der aktiven Substanz der positiven Elektrode nach Anspruch 1, wobei a, b und c so sind, dass -0,08 ≤ a ≤ 0,18, 0,10 ≤ b ≤ 0,4 und 0,02 ≤ c ≤ 0,35.

3. Teilchen der aktiven Substanz der positiven Elektrode nach entweder Anspruch 1 oder Anspruch 2, wobei die Beschichtungsverbindung Y eine durchschnittliche Filmdicke von 0,22 bis 1,0 nm, einen Kristallinitätsgrad von 70 bis 93 %, einen Epitaxiegrad von 70 bis 93 % und ein Beschichtungsverhältnis, d. h. eine Abdeckung, von 70 bis 93 % aufweist.

4. Teilchen der aktiven Substanz der positiven Elektrode nach einem der Ansprüche 1 bis 3, wobei ein Durchschnittswert eines Verhältnisses einer Gesamtanzahl von Atomen der Elemente Al, Mg, Zr, Ti und Si in der Beschichtungsverbindung Y zu einer Anzahl von Atomen eines Elements Ni in der Beschichtungsverbindung Y nicht weniger als 0,5 ist.

5. Teilchen der aktiven Substanz der positiven Elektrode nach einem der Ansprüche 1 bis 4, die in der Form von Teilchen der aktiven Substanz der positiven Elektrode sind, die ferner mit Lithiumcarbonat beschichtet sind.

6. Teilchen der aktiven Substanz der positiven Elektrode nach einem der Ansprüche 1 bis 5, wobei ein Gehalt von Lithiumhydroxid LiOH in den Teilchen der aktiven Substanz der positiven Elektrode nicht mehr als 0,50 Gew.-% beträgt; ein Gehalt von Lithiumcarbonat Li₂CO₃ in den Teilchen der aktiven Substanz der positiven Elektrode nicht mehr als 0,65 Gew.-% beträgt; und ein Gewichtsverhältnis des Gehalts von Lithiumcarbonat zu dem Gehalt von Lithiumhydroxid nicht weniger als 0,9 ist.

7. Teilchen der aktiven Substanz der positiven Elektrode nach einem der Ansprüche 1 bis 6, wobei die Teilchen der aktiven Substanz der positiven Elektrode eine spezifische BET-Oberfläche von 0,05 bis 0,70 m²/g aufweisen.

8. Teilchen der aktiven Substanz der positiven Elektrode nach einem der Ansprüche 1 bis 7, wobei ein mittlerer Durchmesser D₅₀ von aggregierten Teilchen von 1 bis 30 µm.

9. Teilchen der aktiven Substanz der positiven Elektrode nach einem der Ansprüche 1 bis 8, die einen pH-Wert von 2 Gew.-% Pulver von nicht mehr als 11,6 aufweisen.

10. Positive Elektrodenplatte, umfassend die Teilchen der aktiven Substanz der positiven Elektrode nach einem der Ansprüche 1 bis 9, ein Leitungsmittel und ein Bindemittel.

11. Sekundärbatterie mit nicht-wässrigem Elektrolyten, umfassend eine aktive Substanz der positiven Elektrode, umfassend mindestens teilweise die Teilchen der aktiven Substanz der positiven Elektrode nach einem der Ansprüche 1 bis 9.

12. Verwendung der Teilchen der aktiven Substanz der positiven Elektrode wie in einem der Ansprüche 1 bis 9 definiert, in einer Sekundärbatterie mit nicht-wässrigem Elektrolyten.

## Revendications

1. Particules de substance active d'électrode positive comprenant chacune :
une particule centrale X comprenant un oxyde composite de nickelate de lithium ayant une structure en couches qui est représentée par la formule :
L₁₊ₐN_{1-b-c}Co_{b}M_{c}O₂
dans laquelle M est au moins un élément choisi dans le groupe constitué par Mn, Al, B, Mg, Ti, Sn, Zn et Zr ; a est un nombre de -0,1 à 0,2 (-0,1 ≤ a ≤ 0,2); b est un nombre de 0,05 à 0,5 (0,05 ≤ b ≤ 0,5); et c est un nombre de 0,01 à 0,4 (0,01 ≤ c ≤ 0,4); et
un composé de revêtement Y comprenant au moins un élément choisi dans le groupe constitué par Al, Mg, Zr, Ti et Si,
dans lesquelles le composé de revêtement Y a une épaisseur de film moyenne de 0,2 à 5 nm, un degré de cristallinité de 50 à 95 %, un degré d'épitaxie de 50 à 95 % et un taux de revêtement, c'est-à-dire une couverture, de 50 à 95 %.

2. Matériaux de substance active d'électrode positive selon la revendication 1, dans lesquels a, b et c sont tels que -0,08 ≤ a ≤ 0,18, 0,10 ≤ b ≤ 0,4 et 0,02 ≤ c ≤ 0,35.

3. Particules de substance active d'électrode positive selon la revendication 1 ou la revendication 2, dans lesquelles le composé de revêtement Y a une épaisseur de film moyenne de 0,22 à 1,0 nm, un degré de cristallinité de 70 à 93 %, un degré d'épitaxie de 70 à 93 % et un taux de revêtement, c'est-à-dire une couverture, de 70 à 93 %.

4. Particules de substance active d'électrode positive selon l'une quelconque des revendications 1 à 3, dans lesquelles une valeur moyenne d'un rapport d'un nombre total d'atomes d'éléments Al, Mg, Zr, Ti et Si dans le composé de revêtement Y par rapport à un nombre d'atomes d'un élément Ni dans le composé de revêtement Y n'est pas inférieur à 0,5.

5. Particules de substance active d'électrode positive selon l'une quelconque des revendications 1 à 4, qui sont sous la forme de particules de substance active d'électrode positive qui sont en outre enrobées de carbonate de lithium.

6. Particules de substance active d'électrode positive selon l'une quelconque des revendications 1 à 5, dans lesquelles une teneur en hydroxyde de lithium LiOH dans les particules de substance active d'électrode positive n'est pas supérieure à 0,50 % en poids ; une teneur en carbonate de lithium Li₂CO₃ dans les particules de substance active d'électrode positive n'est pas supérieure à 0,65 % en poids ; et un rapport pondéral de la teneur en carbonate de lithium par rapport à la teneur en hydroxyde de lithium n'est pas inférieur à 0,9.

7. Particules de substance active d'électrode positive selon l'une quelconque des revendications 1 à 6, dans lesquelles les particules de substance active d'électrode positive ont une surface spécifique BET de 0,05 à 0,70 m²/g.

8. Particules de substance active d'électrode positive selon l'une quelconque des revendications 1 à 7, dans lesquelles un diamètre médian D₅₀ des particules agrégées est de 1 à 30 µm.

9. Particules de substance active d'électrode positive selon l'une quelconque des revendications 1 à 8, qui ont une valeur de pH de poudre à 2 % en poids non supérieure à 11,6.

10. Feuille d'électrode positive comprenant les particules de substance active d'électrode positive selon l'une quelconque des revendications 1 à 9, un agent conducteur et un liant.

11. Batterie secondaire à électrolyte non aqueux comprenant une substance active d'électrode positive comprenant au moins partiellement les particules de substance active d'électrode positive selon l'une quelconque des revendications 1 à 9.

12. Utilisation des particules de substance active d'électrode positive telles que définies dans l'une quelconque des revendications 1 à 9 dans une batterie secondaire à électrolyte non aqueux.
